# EUROPÄISCHE PATENTANMELDUNG

(11) **EP 4 656 592 A1**
(43) Veröffentlichungstag der Anmeldung: **03.12.2025**
(21) Anmeldenummer: 24020173.1
(22) Anmeldetag: 27.05.2024
(51) Int. Cl.: C01B 3/04

(54) **VERFAHREN UND ANLAGE ZUR GEWINNUNG EINES WASSERSTOFF ENTHALTENDEN PRODUKTS**

(71) Anmelder: Linde GmbH, 82049 Pullach (DE); Selas-Linde GmbH, 82049 Pullach (DE)
(72) Erfinder: Murer, Martin, 82049 Pullach (DE); Reinke, Michael, 82049 Pullach (DE)
(74) Vertreter: Fischer, Werner

(57) **Zusammenfassung**

Die Erfindung betrifft ein Verfahren sowie eine Anlage (100) zur Herstellung eines Wasserstoff enthaltenden Produkts, wobei Ammoniak (1) unter Erhalt eines Ammoniakeinsatzes (2) einer Vorbehandlung (10) unterworfen und der Ammoniakeinsatz (2) in einem beheizten Ammoniakcracker (20) zu einem Ammoniak sowie Wasserstoff und Stickstoff enthaltenden Spaltgas (3) umgesetzt wird, wobei zur Beheizung des Ammoniakcrackers (20) ein schwefelfreies Brenngas unter Bildung eines wasserhaltigen Rauchgases (4a) verfeuert wird. Kennzeichnend hierbei ist, dass zumindest ein Teil des wasserhaltigen Rauchgases in der Vorbehandlung (10) gegen Ammoniak bis unter den Taupunkt abgekühlt wird, wobei kondensiertes Wasser sowie angewärmtes Ammoniak erhalten werden.

## Beschreibung

Die Erfindung betrifft ein Verfahren und eine Anlage zur Gewinnung eines Wasserstoff enthaltenden Produkts unter Verwendung von Ammoniak.

### Hintergrund der Erfindung

Ammoniak kann bekanntermaßen katalytisch zu Stickstoff und Wasserstoff zerlegt bzw. gespalten oder gecrackt werden. Die Reaktion von Ammoniak zu Stickstoff und Wasserstoff ist endotherm und wird durch niedrigen Druck und hohe Temperatur begünstigt. Um den Verdichtungsaufwand für das Wasserstoff enthaltende Produkt gering zu halten, sind dennoch höhere Drücke wünschenswert.

Bereits das bei der Spaltung erhalte, Ammoniak, Wasserstoff und Stickstoff umfassende Spaltgas, kann als Produkt abgegeben werden, da es sich beispielsweise als Brenngas eignet. Daneben können auch ein weitgehend aus Wasserstoff und Stickstoff bestehendes, als Formiergas bezeichnetes Gasgemisch oder reiner Wasseroff als Produkte aus dem Spaltgas gewonnen werden. In all diesen Fällen entsteht ein Wasserstoff enthaltendes Produkt unter Verwendung von Ammoniak.

Aus der Patent- und Nichtpatentliteratur sind unterschiedliche Verfahrenskonzepte und Reaktoren für die Zerlegung von Ammoniak zu Wasserstoff und Stickstoff beschrieben. Zu weiteren Details wird auf entsprechende Literatur verwiesen, statt vieler beispielsweise auf D. Sima et al., Int. J. Hydrogen Energy 45 (2020) 9342-9352.

Entsprechende Verfahrenskonzepte können eine Reaktionseinheit (auch als Ammoniakcracker bezeichnet) nach Art eines Reformierreaktors umfassen, der eine Druckwechseladsorption zur Wasserstoffreinigung zugeordnet ist. Beispielsweise sei in diesem Zusammenhang auf die EP 4 112 539 A1 und die EP 4 112 540 A1 verwiesen.

Im Ammoniakcracker können insbesondere nickelbasierte Katalysatoren bei Spalttemperaturen von bis zu 1000°C verwendet werden. Mit einer nur unwesentlich geringeren Temperatur verlässt das Spaltgas den Ammoniakcracker und muss für seine weitere Behandlung abgekühlt werden.

Zum Erhalt von Wasserstoff wird das abgekühlte Spaltgas üblicherweise durch Druckwechseladsorption behandelt, wobei auch ein Ammoniak sowie Wasserstoff enthaltendes Restgas anfällt, das beispielsweise zur Befeuerung des Ammoniakcrackers verwendet wird. Zusätzliche Feuerungsleistung kann durch die Verbrennung von reinem Ammoniak bereitgestellt werden. Entsprechende Konzepte eignen sich insbesondere für die Herstellung von Wasserstoff hoher Reinheit.

Bei dem im Verfahren eingesetzten Ammoniak handelt es sich vorzugsweise um sogenanntes technisches Ammoniak, das bis zu 0,5 Gewichtsprozent Wasser enthalten kann. Technisches Ammoniak wird weltweit in Tankschiffen und mittels Pipelines transportiert und kann daher in großen Mengen zur Verfügung gestellt werden. Es wird herkömmlicherweise bei einer Temperatur von ca. -33°C und atmosphärischem Druck flüssig in Tanks gelagert. Zur Bereitstellung des dem Ammoniakcracker zugeführten Ammoniakeinsatzes und eines Teils des Brenngases muss das Ammoniak gepumpt, vorgewärmt und verdampft werden. Weiterhin muss das Ammoniak zur Verwendung als Ammoniakeinsatz überhitzt werden.

Für das Vorwärmen und Verdampfen des Ammoniaks sowie das Überhitzen des Ammoniakdampfs auf die für den Ammoniakcracker erforderliche Eintrittstemperatur von bis zu 800°C, ist ein hoher Energieeinsatz nötig, der die Wirtschaftlichkeit des Verfahrens erheblich beeinflusst.

Die vorliegende Erfindung stellt sich die Aufgabe, entsprechende Verfahren und Anlagen zur Gewinnung eines Wasserstoffprodukts unter Verwendung von Ammoniak zu verbessern und insbesondere energieeffizienter zu gestalten.

### Offenbarung der Erfindung

Vor diesem Hintergrund werden ein Verfahren und eine Anlage zur Gewinnung eines wasserstoffhaltigen Produkts mit den Merkmalen der unabhängigen Patentansprüche vorgeschlagen. Ausgestaltungen sind Gegenstand der abhängigen Patentansprüche und der nachfolgenden Beschreibung.

Die vorliegende Erfindung löst das Problem der Steigerung der Energieeffizienz dadurch, dass zumindest ein Teil des hohen Wärmebedarfs für die Aufbereitung des Ammoniakeinsatzes durch im Prozess anfallende Niedertemperaturwärme, insbesondere die Kondensationswärme von Wasserdampf, der in dem bei der Beheizung des Ammoniakcrackers erzeugten Rauchgas vorliegt, bereitgestellt wird. Wenn zur Beheizung des Ammoniakcrackers ein Brennstoff eingesetzt wird, der hauptsächlich Ammoniak und Wasserstoff enthält, ist das entstehende Rauchgas schwefelfrei und weist einen Wassergehalt im Bereich von 22 bis 25mol-% auf. Der Taupunkt dieses drucklos anfallenden Rauchgases liegt dabei bei etwa 60°C, so dass die Kondensationswärme des Wassers dazu genutzt werden kann, das flüssige Ammoniak vorzuwärmen und ggf. zumindest auch teilweise zu verdampfen.

Es wird also in dem vorgeschlagenen Verfahren zur Herstellung eines Wasserstoff enthaltenden Produkts Ammoniak unter Erhalt eines Ammoniakeinsatzes einer Vorbehandlung unterworfen und der Ammoniakeinsatz in einem brennerbefeuerten Ammoniakcracker zu einem Ammoniak sowie Wasserstoff und Stickstoff enthaltenden Spaltgas umgesetzt, wobei zur Beheizung des Ammoniakcrackers ein Brenngas unter Bildung eines wasserhaltigen Rauchgases verfeuert wird.

Die Kondensation des im Rauchgas enthaltenen Wasserdampfs kann dabei etwa in einer Kondensationskolonne stattfinden, die zumindest einen Kondensator umfasst, in dem der im Rauchgas enthaltene Wasserdampf kondensiert und seine Kondensationswärme auf ein Kältemittel übertragen wird, das anschließend der Vorbehandlung zugeführt wird. Das gewonnene Wasser kann direkt oder über einen Zwischenkreislauf gegen flüssiges Ammoniak gekühlt werden. Erfahrungen mit Submerged Combustion Vaporizers (SCV), die flüssiges Erdgas (engl.: Liquid Natural Gas, LNG) verdampfen, zeigen dass keine Gefahr des Einfrierens besteht, wenn der Wasserdurchsatz ausreichend hoch ist.

Durch die Verwendung der Kondensationswärme des im Rauchgas enthaltenen Wassers zur Vorbehandlung des Ammoniaks, kann die im Wasserdampf gespeicherte Wärme im Verfahren direkt weiterverwendet werden, sodass die Effizienz des gesamten Verfahrens gesteigert wird.

Weiterhin kann aufgrund der Schwefelfreiheit des Rauchgases mehr seiner fühlbaren Wärme genutzt werden, da kein Sicherheitsabstand zum Taupunkt eingehalten werden muss, um Korrosionsschäden an den eingesetzten Wärmeübertrager zu verhindern.

Zusätzlich wäscht das kondensierende Wasser eventuell vorhandenes Ammoniak aus dem Rauchgas aus, wodurch Ammoniakemissionen verringert und Kosten für Ammoniak-Schlupfkatalysatoren und Katalysatoren für eine selektive katalytische Reduktion (engl.: selective catalytic reduction, SCR) gesenkt werden können.

In einer Ausgestaltung umfasst die Vorbehandlung ein Vorwärmen und/oder Verdampfen und/oder Überhitzen des Ammoniaks. Die bei der Kondensation des Wassers gewonnene Wärme wird dabei insbesondere zum Vorwärmen und/oder Verdampfen des Ammoniaks verwendet. Dabei wird, wenn die Wärme zum Verdampfen von Ammoniak verwendet werden soll, die Kondensationswärme als Wärmequelle für eine Wärmepumpe verwendet, die ein weiteres Kältemittel erwärmt, das anschließend zum Verdampfen des Ammoniaks verwendet wird. Zur Vorbehandlung können beispielsweise drei Wärmetauscher vorgesehen sein, die nacheinander geschaltet sind. Dabei kann in einem ersten Wärmetauscher das Ammoniak vorgewärmt werden, in einem zweiten Wärmetauscher, der dem ersten Wärmetauscher nachgeschaltet ist, das vorgewärmte Ammoniak verdampft werden, und in einem dritten Wärmetauscher, der dem zweiten Wärmetauscher nachgeschaltet ist, das verdampfte Ammoniak überhitzt werden. Eine Aufteilung in drei Wärmetauscher ist nicht notwendig und die Vorbehandlung kann auch mit mehr oder weniger Wärmetauschern oder in einer anderen Konfiguration durchgeführt werden.

Da die Kondensationswärme auf einem niedrigen Temperaturniveau von ca. 60°C bereit steht, kann sie lediglich zum Vorwärmen und/oder Verdampfen des Ammoniaks verwendet werden. Auf einem höheren Temperaturniveau im Verfahren anfallende Wärme kann an anderen Stellen im Verfahren eingesetzt werden. Beispielsweise kann die Wärme des im Ammoniakcracker mit bis zu 900°C erhaltenen Spaltgases oder die Wärme des Rauchgases dazu genutzt werden, um Ammoniak in der Vorbehandlung zu überhitzten. Weiterhin ist denkbar, die Wärme des Spaltgases oder des Rauchgases zur Vorwärmung von Verbrennungsluft, die bei der Verfeuerung des Brenngases verwendet wird, und/oder des Brenngases zu verwenden. Dadurch kann die Effizienz des Verfahrens weiter erhöht werden und es muss weniger Ammoniak als Brennstoff für die Bereitstellung der dem Ammoniakcracker zugeführten Wärme verfeuert werden, wodurch der Gesamtammoniakverbrauch gesenkt wird.

In einer Ausführungsform umfasst die Kondensation eine erste Kondensation und eine zweite Kondensation, die nacheinander durchgeführt werden. Dabei kann insbesondere die bei der ersten Kondensation gewonnene Wärme zum Verdampfen des Ammoniaks in der Vorbehandlung und die bei der zweiten Kondensation gewonnene Wärme zum Vorwärmen des Ammoniaks in der Vorbehandlung verwendet werden. Beispielsweise kann in der ersten Kondensation die Kondensationswärme in einem ersten Kondensator auf ein erstes Kältemittel und in der zweiten Kondensation in einem zweiten Kondensator auf ein zweites Kältemittel übertragen werden. Da bei der zweiten Kondensation Rauchgas mit einer geringeren Menge an Wasserdampf, der kondensiert werden kann, vorliegt, wird in der zweiten Kondensation weniger Wärme übertragen. Daher wird die bei der zweiten Kondensation zurückgewonnene Wärme zum Vorwärmen des Ammoniaks verwendet, das weniger energieintensiv ist, als das Verdampfen, und die bei der ersten Kondensation zurückgewonnene Wärme zum Verdampfen des Ammoniaks. Dazu wird beispielsweise das zweite Kältemittel dem Wärmetauscher, in dem der Ammoniak vorgeheizt wird, und das erste Kältemittel dem Wärmetauscher, in dem der Ammoniak verdampft wird, zugeführt. Insbesondere kann bei der Durchführung der ersten Kondensation und der zweiten Kondensation auf eine Überhitzung verzichtet werden, indem ein Teil des Ammoniaks durch die bei der ersten Kondensation zurückgewonnen Wärme verdampft wird und der andere Teil des Ammoniaks unter Verwendung von Wärme des Spaltgases oder eines Teils hiervon und/oder Wärme des Rauchgases oder eines Teils hiervon verdampft wird. Die Verdampfung findet dabei in beiden Fällen bei einem geringen Druck statt, die beiden Ströme von verdampftem Ammoniak werden zu einem Strom zusammengeführt, und anschließend durch einen Verdichter verdichtet und dem Ammoniakcracker als Ammoniakeinsatz zugeführt. Weiterhin kann der Ammoniak bei niedrigem Druck verdampft werden und anschließend einer Verdichtung unterworfen werden, bevor der verdampfte Ammoniak mit dem überhitzten Ammoniak gemischt wird. Durch das Verdampfen bei niedrigem Druck sind weniger Komponenten notwendig bei geringem Stromverbrauch nötig.

In einer Ausgestaltung wird das Spaltgas oder ein Teil hiervon unter Erhalt einer gegenüber dem Spaltgas an Wasserstoff angereicherten und an Ammoniak abgereicherten Produktfraktion und eines gegenüber dem Spaltgas an Wasserstoff abgereicherten und an Ammoniak angereicherten Restgases einer Druckwechseladsorption unterworfen. Eine derartige Ausgestaltung kann insbesondere dann zum Einsatz kommen, wenn das Wasserstoff enthaltende Produkt im Wesentlichen Wasserstoff ist. Bei der Produktfraktion kann es sich insbesondere um reinen Wasserstoff bzw. Wasserstoff, der nur Spuren von Stickstoff enthält, handeln. Wenn als Produkt Formiergas bereitgestellt werden soll, ist eine entsprechende Druckwechseladsorption nicht erforderlich. Hierbei müssen lediglich Wasser und Ammoniak abgeschieden werden. An beliebiger Stelle kann dabei ein Gasstrom abgezweigt und wie das bei der Druckwechseladsorption gewonnene Restgas für die Beheizung des Ammoniakcrackers verwendet werden.

Die Produktfraktion kann in Ausgestaltungen mit Druckwechseladsorption insbesondere zu mehr als 75%, 80%, 90%, 95%, 98%, 99%, 99,5% oder 99,9% aus Wasserstoff bestehen und entsprechend 0,1 bis 25% an anderen Gaskomponenten aufweisen. Das Restgas kann insbesondere 0 bis 10% Ammoniak und ansonsten Stickstoff und Wasserstoff aufweisen, ggf. auch Wasser, falls technischer Ammoniak verwendet wird.

Die im Rahmen des vorgeschlagenen Verfahrens verwendete Druckwechseladsorption kann in jeglicher, aus dem Stand der Technik bekannter Weise durchgeführt werden, wobei die Produktfraktion in der Druckwechseladsorption auf einem Druckniveau gebildet wird, das dem Einspeisedruck in die Druckwechseladsorption entsprechen oder geringfügig darunter liegen kann, d.h. dass die Produktfraktion in der Druckwechseladsorption im Adsorptionstakt eines oder mehrerer Adsorberbehälter gebildet wird, wobei insbesondere Wasserstoff eine nicht adsorbierende Komponente darstellt. Das Restgas stellt dagegen die bei geringerem Druck im Desorptionstakt gebildete Gasmischung mit den zuvor adsorbierten Komponenten dar.

In Ausgestaltungen der vorliegenden Erfindung wird der Ammoniakcracker mit einer Reaktoraustrittstemperatur von 400 bis 1000 °C, insbesondere mit einer Reaktoraustrittstemperatur von 550 bis 850°C betrieben, wobei der Reaktionsdruck zwischen 1 und 70 bar Absolutdruck, insbesondere zwischen 20 und 50 bar Absolutdruck liegt.

Hohe Reaktionsdrücke sind besonders vorteilhaft, damit der erzeugte Wasserstoff ohne oder mit nur geringem Verdichtungsaufwand als Produkt abgegeben werden kann. Die Erzielung entsprechender Reaktionsdrücke ist umso einfacher möglich, als der Druck des gewöhnlich flüssig bereitgestellten Ammoniaks mit wenig Energieaufwand erhöht werden kann. Damit unter diesen Bedingungen ein ausreichend hoher, wirtschaftlich sinnvoller Umsetzungsgrad des eingesetzten Ammoniaks erreicht wird, werden vorteilhafterweise die angegebenen Reaktionstemperaturen bzw. Reaktoraustrittstemperaturen verwendet.

In einer Ausgestaltung ist vorgesehen, dass der Ammoniakcracker ohne Dampfzugabe zu einem dem Ammoniakcracker zugeführten Ammoniakeinsatzes betrieben wird. Auf diese Weise können der Wassergehalt in dem Spaltgas und der damit verbundene Trennaufwand reduziert werden. Ferner verringert der Verzicht auf ein separates Dampfsystem die Erstellungskosten einer entsprechenden Anlage.

In einer Ausgestaltung ist der Ammoniakcracker zweistufig ausgelegt. Dazu weist der Ammoniakcracker einen Vorcracker (Pre-Cracker) und einen Hauptcracker auf, die seriell zueinander angeordnet sind, wobei der Vorcracker stromaufwärts des Hauptcrackers angeordnet ist. Der Vorcracker ist insbesondere ein adiabater Ammoniakcracker, d.h. im Vorcracker wird der Ammoniakeinsatz ohne Zufuhr von Wärme teilweise katalytisch umgesetzt. Durch die zweistufige Ausführung des Ammoniakcrackers kann die Last zwischen dem Vorcracker und dem Hauptcracker in einfacher Weise verteilt werden. Weiterhin nimmt der Partialdruck des Ammoniaks ab, da im Vorcracker bereits ein Teil des Ammoniaks umgesetzt wird. Das ermöglicht, dass der Hauptcracker bei höheren Temperaturen, und damit mit einer höheren Umsetzung von Ammoniak, betrieben werden kann, ohne dass die Gefahr einer Nitridierung besteht.

Ausgestaltungen der vorliegenden Erfindung können auch umfassen, dass die Produktfraktion oder ein Teil hiervon einer Gasturbine zugeführt wird. Die Gasturbine kann beispielsweise mit einem Generator gekoppelt sein, sodass die Produktfraktion zur Erzeugung von Strom dient.

Eine vorgeschlagene Anlage zur Herstellung eines Wasserstoff enthaltenden Produkts umfasst eine Vorbehandlung, einen brennerbefeuerten Ammoniakcracker und eine mit der Vorbehandlung verbundenen Kondensationseinrichtung, und ist dafür eingerichtet, Ammoniak in der Vorbehandlung zu einen Ammoniakeinsatz aufzubereiten und diesen im Ammoniakcracker, dem Wärme zugeführt wird, unter Erhalt eines Ammoniak sowie Wasserstoff und Stickstoff enthaltenden Spaltgases umzusetzen, wobei zur Bereitstellung der Wärme oder eines Teils hiervon ein schwefelfreies Brenngas verfeuert wird. Zur Bereitstellung von zur Vorbehandlung des Ammoniaks benötigter Wärme kann ein wasserhaltiges Rauchgas, das bei der Befeuerung des Ammoniakcrackers entsteht, in der Kondensationseinrichtung bis unter den Taupunkt abgekühlt werden, um die Kondensationswärme zur Vorbehandlung des Ammoniaks einzusetzen.

Die Kondensationseinrichtung kann dabei insbesondere als Kondensationskolonne ausgestaltet sein, die einen und mehrere nacheinander geschaltete Kondensatoren umfasst, wobei in jedem der Kondensatoren die Kondensationswärme des kondensierenden Wasserdampfs auf ein Kältemittel übertragen wird, das seine Wärme in der Vorbehandlung auf flüssiges Ammoniak überträgt. Die Kältemittel können, bevor diese in der Vorbehandlung verwendet werden, durch einen Verdichter, beispielsweise eine Kompressionspumpe verdichtet werden. Weiterhin ist möglich, dass die Anlage eine Wärmepumpe aufweist, die das Kältemittel als Wärmequelle verwendet, um ein weiteres Kältemittel auf eine Temperatur zu bringen, die zum Verdampfen des vorgewärmten Ammoniaks ausreicht.

Zu weiteren Merkmalen und Vorteilen einer entsprechenden Anlage und Ausgestaltungen hiervon sei auf die obigen Erläuterungen betreffend das erfindungsgemäß vorgeschlagenen Verfahren und seine Ausgestaltungen ausdrücklich verwiesen, da diese hierfür in gleicher Weise gelten.

### Kurze Beschreibung der Zeichnung

Ausführungsformen der Erfindung werden nachfolgend rein beispielhaft unter Bezugnahme auf die beigefügten Zeichnungen beschrieben.
Figur 1 veranschaulicht ein Verfahren bzw. eine Anlage gemäß einer Ausführungsform der vorliegenden Erfindung,
Figur 2 veranschaulicht ein Verfahren bzw. eine Anlage gemäß einer weiteren Ausführungsform der vorliegenden Erfindung,
Figur 3 veranschaulicht ein Verfahren bzw. eine Anlage gemäß einer weiteren Ausführungsform der vorliegenden Erfindung,
Figur 4 veranschaulicht ein Verfahren bzw. eine Anlage gemäß einer weiteren Ausführungsform der vorliegenden Erfindung,
Figur 5 veranschaulicht ein Verfahren bzw. eine Anlage gemäß einer weiteren Ausführungsform der vorliegenden Erfindung, und
Figur 6 veranschaulicht ein Verfahren bzw. eine Anlage gemäß einer weiteren Ausführungsform der vorliegenden Erfindung.

### Ausführungsformen der Erfindung

Die nachfolgend beschriebenen Ausführungsformen werden nur zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

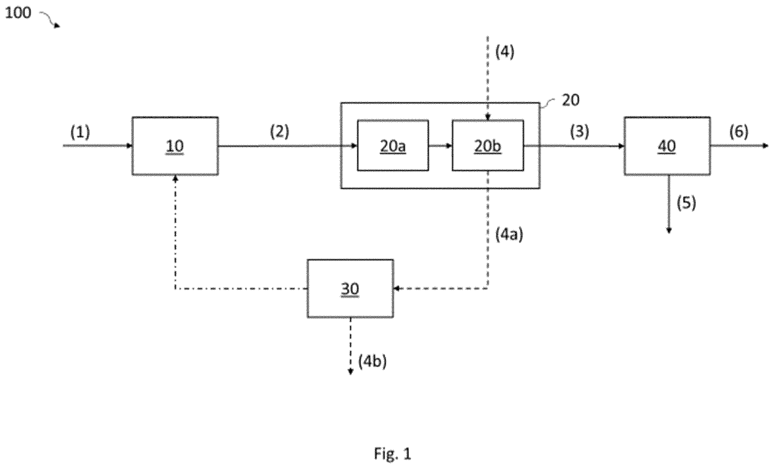

In Figur 1 ist ein Verfahren bzw. eine Anlage gemäß einer Ausgestaltung der vorliegenden Erfindung veranschaulicht und insgesamt mit 100 bezeichnet. Durch Figur 1 ist insbesondere der grundlegende Ablauf des Verfahrens 100 bzw. der Aufbau der Anlage 100 dargestellt.

Im Verfahren bzw. der Anlage wird Ammoniak 1, der insbesondere aus einem externen Tank (nicht gezeigt) stammen kann und in flüssigem Zustand bei einer Temperatur von -33°C vorliegt, einer Vorbehandlung 10 zugeführt. In der Vorbehandlung 10 wird der Ammoniak vorgewärmt, verdampft und überhitzt, um einen Ammoniakeinsatz 2 zu erhalten.

Anschließend wird der Ammoniakeinsatz 2 einem Ammoniakcracker 20 zugeführt. Der Ammoniakcracker 20 ist ein zweistufiger Ammoniakcracker 20 mit einem adiabatischen Vorcracker 20a und einem Hauptcracker 20b. Im Vorcracker 20a wird der Ammoniakeinsatz 2 zumindest teilweise katalytisch ohne Zufuhr von Wärme in ein Zwischenproduktgas umgesetzt, das Stickstoff und Wasserstoff enthält. Anschließend wird das Zwischenproduktgas dem Hauptcracker 20b zugeführt, wo es unter Zufuhr von Wärme weiter katalytisch zum Spaltgas 3 umwandelt wird. Zwischen dem Vorcracker 20a und dem Hauptcracker 20b kann insbesondere noch ein Wärmetauscher zwischengeschaltet sein, der das aus dem Vorcracker 20a austretenden Zwischenproduktgas nochmals auf eine vorbestimmte Temperatur vorwärmt, bevor dieses dem Hauptcracker 20b zugeführt wird. Zur Bereitstellung der dem Hauptcracker 20b zugeführten Wärme wird ein schwefelfreies Brenngas 4 verfeuert, wobei Rauchgas 4a entsteht. Als Brenngas 4 kann beispielsweise Ammoniak in gasförmiger Form, Erdgas oder ein bei einer Druckwechseladsorption entstehendes Restgas 5 verwendet werden. In den Figuren sind Brenngas 4 und Rauchgas 4a mit gestrichelten Linien gezeigt. In den weiteren Figuren ist der Ammoniakcracker 20 nicht als zweistufiger Ammoniakcracker gezeigt. Es versteht sich, dass der Ammoniakcracker 20 in jeder der gezeigten Ausgestaltungen als zweistufiger Ammoniakcracker ausgestaltet sein kann.

Das Spaltgas 3 wird anschließend einer Druckwechseladsorption 40 zugeführt, die das Spaltgas in eine Produktfraktion 6 und ein Restgas 5 trennt. Die Produktfraktion 6 ist dabei gegenüber dem Spaltgas 3 an Wasserstoff angereichert und an Ammoniak abgereichert, während das Restgas 5 gegenüber dem Spaltgas 3 an Wasserstoff abgereichert und Ammoniak angereichert ist. Das Restgas 5 kann beispielsweise zur Bereitstellung der dem Ammoniakcracker 20 zugeführten Wärme verfeuert werden.

Das Rauchgas 4a wird anschließend einer Kondensationseinrichtung 30 zugeführt, die beispielsweise eine Kondensationskolonne aufweisen kann, die einen oder mehrere Kondensatoren umfasst, in denen der im Rauchgas 4a enthaltene Wasserdampf kondensiert und die dabei freiwerdende Kondensationswärme auf ein Kältemittel übertragen wird.

Die in der Kondensationseinrichtung 30 zurückgewonnene Wärme wird der Vorbehandlung 10 zugeführt und in dieser insbesondere zum Vorwärmen und Verdampfen des Ammoniaks 1 verwendet. Der Strom der Wärme ist in Figur 1 und allen weiteren Figuren mit einer strich-punkt Linie dargestellt.

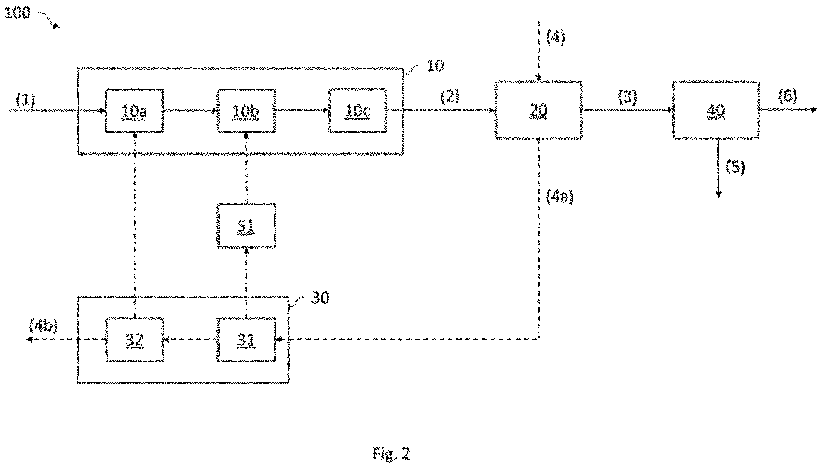

In Figur 2 ist ein Verfahren bzw. eine Anlage gemäß einer weiteren Ausgestaltung der vorliegenden Erfindung veranschaulicht und insgesamt mit 100 bezeichnet. Gleiche Bezugszeichen beziehen sich dabei auf dieselben Verfahrensschritte bzw. Anlagenteile wie in Figur 1.

Die in Figur 2 gezeigte Vorbehandlung 10 umfasst Vorwärmen 10a, Verdampfen 10b und Überhitzen 10c des Ammoniaks 1, um den Ammoniakeinsatz 2 zu erhalten. Das weitere Vorgehen im Zusammenhang mit der Umwandlung des Ammoniakeinsatzes 2 entspricht dem in Figur 1 dargelegten Vorgehen.

Die Kondensationseinrichtung 30 der Ausgestaltung der Figur 2 umfasst eine erste Kondensation 31 und eine zweite Kondensation 32. Das Rauchgas 4a wird zunächst der ersten Kondensation 31 zugeführt. Da der ersten Kondensation 31 das wärmere Rauchgas 4a zugeführt wird, enthält das Rauchgas 4a eine große Menge an Wasserdampf, der kondensieren kann. Daher kann in der ersten Kondensation 31 eine große Menge an Kondensationswärme zurückgewonnen werden. Das Rauchgas 4a, das der zweiten Kondensation 32 zugeführt wird, enthält eine geringere Menge an Wasserdampf, da ein Teil des Wasserdampfes bereits in der ersten Kondensation 31 kondensiert ist, und es kann daher nur noch eine geringere Menge an Kondensationswärme zurückgewonnen werden.

Die erste und zweite Kondensation 31, 32 können beispielsweise als Kondensatoren einer Kondensationskolonne ausgestaltet sein, die die Kondensationswärme auf ein Kältemittel übertragen.

In der ersten Kondensation 31 wird Wärme in einem Wärmepumpenkreislauf auf das Kältemittel übertragen und einer Verdichtung 51, die beispielsweise durch einen Kompressor durchgeführt wird, zugeführt. Das verdichtete Kältemittel wird anschließend zum Verdampfen 10b des Ammoniaks 1 verwendet. Während in Figur 2 der Fluss der Wärme (strich-punkt Linie) nur in eine Richtung gezeigt ist, versteht es sich, dass, wenn Kältemittel als Wärmeträger verwendet wird, das Kältemittel nach der Wärmepumpe wieder zur ersten Kondensation 31 zurückgeführt wird, sodass ein Kreislauf entsteht.

Auch die zweite Kondensation 32 kann in der Anlage 100 mittels eines Kondensators umgesetzt sein, der die Kondensationswärme auf ein zweites Kältemittel überträgt, das anschließend zum Vorwärmen 10a des Ammoniaks 1 verwendet wird. Das Vorwärmen 10a kann wiederum durch einen Wärmetauscher umgesetzt sein, der das zweite Kältemittel als Wärmequelle verwendet, um den Ammoniak 1 vorzuwärmen. Das zweite Kältemittel wird anschließend wieder zur zweiten Kondensation 32 zurückgeführt (nicht gezeigt), sodass ein Kreislauf entsteht.

Anschließend wird der Ammoniak 1 in der Vorbehandlung 10 überhitzt (Überhitzen 10c) und dem Ammoniakcracker 20 zugeführt.

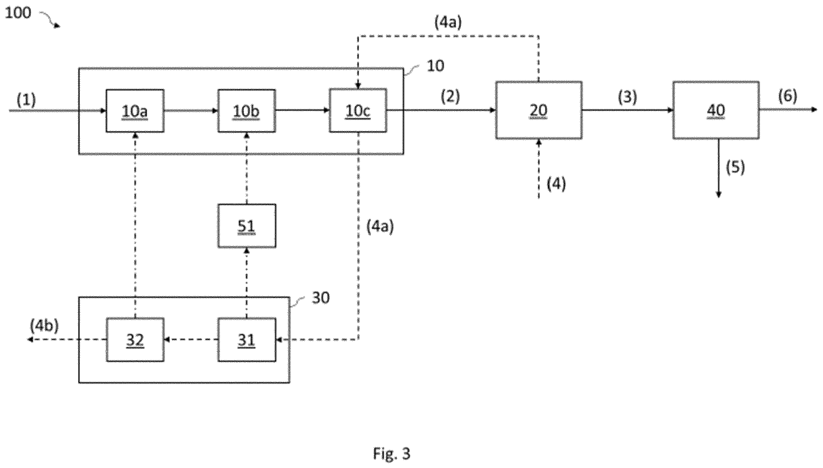

In Figur 3 ist ein Verfahren bzw. eine Anlage gemäß einer weiteren Ausgestaltung der vorliegenden Erfindung veranschaulicht und insgesamt mit 100 bezeichnet. Gleiche Bezugszeichen beziehen sich dabei auf dieselben Verfahrensschritte bzw. Anlagenteile wie in den vorherigen Figuren.

Der Ablauf des Verfahrens bzw. der Aufbau der Anlage 100 ist dabei ähnlich der in Figur 2 gezeigten Ausgestaltung, sodass hier nur auf die Unterschiede eingegangen werden soll und für weitere Details auf die Ausführungen zu Figur 2 verwiesen wird.

Während beim Überhitzen 10c in der Vorbehandlung 10 der Figur 2 Wärme von extern zugeführt wurde, wird in der Ausgestaltung der Figur 3 das bei der Verfeuerung des Brenngases 4 entstehende Rauchgas 4a in der Vorbehandlung 10 zum Überhitzen 10c des Ammoniaks 1 verwendet.

Die Anlage 100 kann dazu beispielsweise einen weiteren Wärmetauscher aufweisen, dem das Rauchgas 4a als Wärmequelle zugeführt wird und der die Wärme vom Rauchgas 4a auf das Ammoniak 1 überträgt. Anschließend wird das Rauchgas 4a der Kondensationseinrichtung 30 zugeführt.

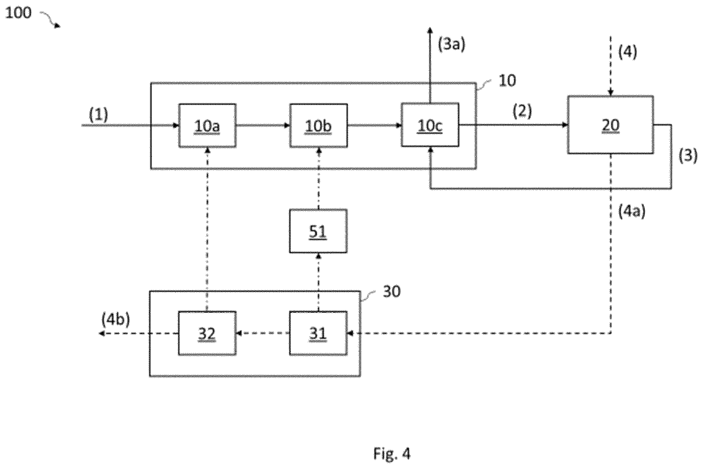

In Figur 4 ist ein Verfahren bzw. eine Anlage gemäß einer weiteren Ausgestaltung der vorliegenden Erfindung veranschaulicht und insgesamt mit 100 bezeichnet. Gleiche Bezugszeichen beziehen sich dabei auf dieselben Verfahrensschritte bzw. Anlagenteile wie in den vorherigen Figuren.

Der Ablauf des Verfahrens bzw. der Aufbau der Anlage 100 ist dabei ähnlich der in Figur 2 bzw. 3 gezeigten Ausgestaltung, sodass hier nur auf die Unterschiede eingegangen werden soll und für weitere Details auf die Ausführungen zu den Figuren 2 und 3 verwiesen wird.

Anstelle des Rauchgases 4a wird zum Überhitzen 10c des Ammoniaks 1 in der Ausgestaltung der Figur 4 das vom Ammoniakcracker 20 erzeugte Spaltgas 3, dass den Ammoniakcracker 20 mit einer Temperatur oberhalb von 550°C verlässt, verwendet.

Dabei ist insbesondere auch denkbar, dass zum Überhitzen 10c des Ammoniaks 1 eine Kombination von Spaltgas 3 und Rauchgas 4a als Wärmequelle verwendet wird.

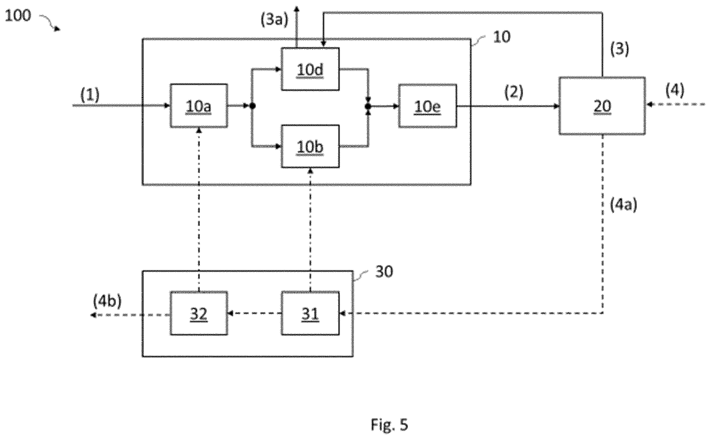

In Figur 5 ist ein Verfahren bzw. eine Anlage gemäß einer weiteren Ausgestaltung der vorliegenden Erfindung veranschaulicht und insgesamt mit 100 bezeichnet. Gleiche Bezugszeichen beziehen sich dabei auf dieselben Verfahrensschritte bzw. Anlagenteile wie in den vorherigen Figuren.

Der Ablauf des Verfahrens bzw. der Aufbau der Anlage 100 ist dabei ähnlich den in den Figuren 2 bis 4 gezeigten Ausgestaltungen, sodass hier nur auf die Unterschiede eingegangen werden soll und für weitere Details auf die Ausführungen zu den Figur 2 bis 4 verwiesen wird.

Im Gegensatz zu den Ausgestaltungen der Figuren 2 bis 4, weist die Vorbehandlung 10 der Ausgestaltung in Figur 5 kein Überhitzen 10c des Ammoniaks 1 auf. Stattdessen wird das Ammoniak 1, das unter Verwendung der Wärme der zweiten Kondensation 32 vorgewärmt wurde (Vorwärmen 10a) aufgeteilt. Ein Teil des vorgewärmten Ammoniaks 1 wird, wie auch in den vorherigen Ausgestaltungen, unter Verwendung der Wärme der ersten Kondensation 31 verdampft. Der andere Teil des vorgewärmten Ammoniaks 1 wird unter Verwendung der Wärme des Spaltgases 3 unter Erhalt eines abgekühlten Spaltgases 3a verdampft. Dabei findet das Verdampfen 10b, 10d in beiden Fällen bei verringertem Druck statt.

Anschließend werden beide Ströme des verdampften Ammoniaks 1 zusammengeführt und durch einer Verdichtung 10e zugeführt, um den Ammoniakeinsatz 2 zu erhalten, der wiederum dem Ammoniakcracker 20 zugeführt und in diesem umgesetzt wird.

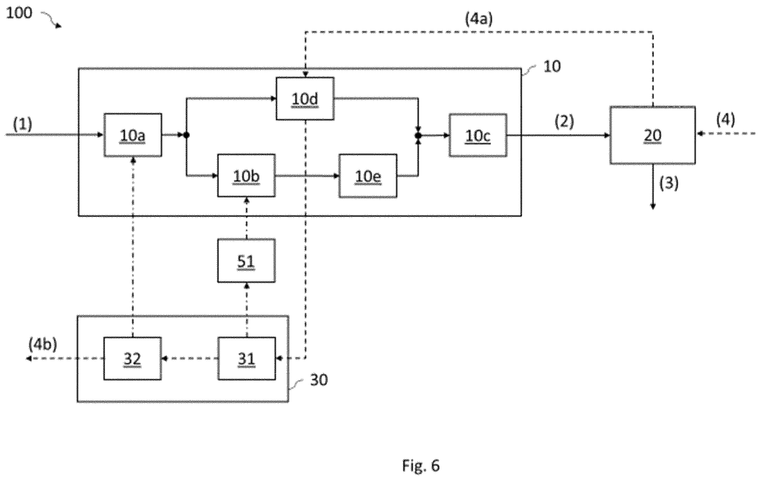

In Figur 6 ist ein Verfahren bzw. eine Anlage gemäß einer weiteren Ausgestaltung der vorliegenden Erfindung veranschaulicht und insgesamt mit 100 bezeichnet. Gleiche Bezugszeichen beziehen sich dabei auf dieselben Verfahrensschritte bzw. Anlagenteile wie in den vorherigen Figuren.

Der Ablauf des Verfahrens bzw. der Aufbau der Anlage 100 ist dabei ähnlich der in Figur 5 gezeigten Ausgestaltung, sodass hier nur auf die Unterschiede eingegangen werden soll und für weitere Details auf die Ausführungen zu den Figur 2 bis 5 verwiesen wird.

Im Gegensatz zur in Figur 5 gezeigten Ausgestaltung wird statt der Wärme des Spaltgases 3 die Wärme des Rauchgases 4a zum Verdampfen 10d eines Teils des vorgewärmten Ammoniaks 1 verwendet.

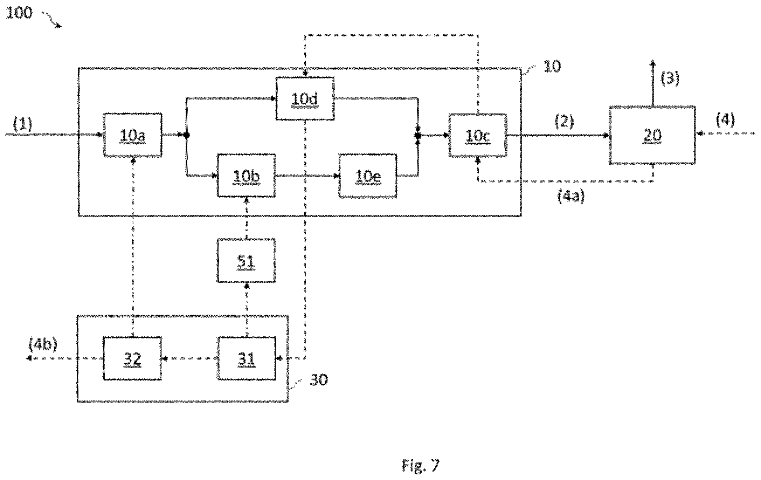

In Figur 7 ist ein Verfahren bzw. eine Anlage gemäß einer weiteren Ausgestaltung der vorliegenden Erfindung veranschaulicht und insgesamt mit 100 bezeichnet. Gleiche Bezugszeichen beziehen sich dabei auf dieselben Verfahrensschritte bzw. Anlagenteile wie in den vorherigen Figuren.

Der Ablauf des Verfahrens bzw. der Aufbau der Anlage 100 ist dabei ähnlich der in Figur 5 oder 6 gezeigten Ausgestaltung, sodass hier nur auf die Unterschiede eingegangen werden soll und für weitere Details auf die Ausführungen zu den Figur 2 bis 6 verwiesen wird.

Im Gegensatz zur in Figur 6 gezeigten Ausgestaltung wird das Rauchgas 4a zunächst der Überhitzung 10c der Vorbehandlung 10 zugeführt, in der ein Teil der Wärme 4a zum Überhitzen des Ammoniaks 1 verwendet wird. Anschließend wird ein Teil der Wärme des Rauchgases 4a zum Verdampfen 10d eines Teils des vorgewärmten Ammoniaks 1 verwendet.

## Patentansprüche

1. Verfahren (100) zur Herstellung eines Wasserstoff enthaltenden Produkts, bei dem Ammoniak (1) unter Erhalt eines Ammoniakeinsatzes (2) einer Vorbehandlung (10) unterworfen und der Ammoniakeinsatz (2) in einem beheizten Ammoniakcracker (20) zu einem Ammoniak sowie Wasserstoff und Stickstoff enthaltenden Spaltgas (3) umgesetzt wird, wobei zur Beheizung des Ammoniakcrackers (20) ein schwefelfreies Brenngas unter Bildung eines wasserhaltigen Rauchgases (4a) verfeuert wird, **dadurch gekennzeichnet, dass** zumindest ein Teil des wasserhaltigen Rauchgases in der Vorbehandlung (10) gegen Ammoniak bis unter den Taupunkt abgekühlt wird, wobei kondensiertes Wasser sowie angewärmtes Ammoniak erhalten werden.

2. Verfahren (100) nach Anspruch 1, bei dem die Vorbehandlung (10) ein Vorwärmen (10a) und/oder Verdampfen (10b, 10d) und/oder Überhitzen (10c) des Ammoniaks (1) umfasst und die durch die Kondensation (30) bereitgestellte Wärme zum Vorwärmen (10a) und/oder Verdampfen (10b) des Ammoniaks (1) verwendet wird.

3. Verfahren (100) nach Anspruch 1 oder 2, bei dem die Wärme des Spaltgases (3) und/oder des Rauchgases (4a) zum Überhitzen (10c) des Ammoniaks (1) in der Vorbehandlung (10) verwendet wird.

4. Verfahren nach einem der vorhergehenden Ansprüche, bei dem die Kondensation (30) eine erste Kondensation (31) und eine zweite Kondensation (32) umfasst, die nacheinander durchgeführt werden.

5. Verfahren nach Anspruch 4, bei dem die bei der ersten Kondensation (31) gewonnene Wärme in der Vorbehandlung (10) zum Verdampfen (10b) von Ammoniak (1) und die bei der zweiten Kondensation (32) gewonnene Wärme zum Vorwärmen (10a) von Ammoniak (1) verwendet wird.

6. Verfahren nach Anspruch 5, bei dem das Verdampfen (10b) des Ammoniaks (1) bei niedrigem Druck durchgeführt wird und der verdampfte Ammoniak anschließend einer Verdichtung (10e) unterworfen wird.

7. Verfahren (100) nach einem der vorhergehenden Ansprüche, bei dem das Spaltgas (3, 3a) oder ein Teil hiervon unter Erhalt einer gegenüber dem Spaltgas (3) an Wasserstoff angereicherten und an Ammoniak abgereicherten Produktfraktion (6) und eines gegenüber dem Spaltgas (3, 3a) an Wasserstoff abgereicherten und Ammoniak angereicherten Restgases (5) einer Druckwechseladsorption unterworfen wird.

8. Verfahren (100) nach einem der vorhergehenden Ansprüche, wobei der Ammoniakcracker (20) mit einer Reaktoraustrittstemperatur von 400 °C bis 1.000 °C, insbesondere mit einer Reaktoraustrittstemperatur von 550 °C bis 850 °C betrieben wird.

9. Verfahren (100) nach einem der vorhergehenden Ansprüche, wobei der Ammoniakcracker (20) mit einem Reaktionsdruck zwischen 1 und 70 bar Absolutdruck, insbesondere zwischen 20 und 50 bar Absolutdruck betrieben wird.

10. Verfahren (100) nach einem der vorhergehenden Ansprüche, wobei der Ammoniakcracker (20) als zweistufiger Ammoniakcracker mit einem adiabaten Vorcracker (20a) und einem brennerbefeuerten Hauptcracker (20b) ausgebildet ist.

11. Anlage (100) zur Herstellung eines Wasserstoff enthaltenden Produkts, umfassend eine Vorbehandlung (10), einen brennerbefeuerten Ammoniakcracker (20) und eine mit der Vorbehandlung (10) verbundenen Kondensationseinrichtung (30), wobei die Anlage (100) dazu eingerichtet ist, Ammoniak (1) in der Vorbehandlung (10) zu einen Ammoniakeinsatz (2) aufzubereiten und diesen im Ammoniakcracker (20) unter Erhalt eines enthaltenden Spaltgases (3) umzusetzen, wobei zur Befeuerung des Ammoniakcrackers (20) ein schwefelfreies Brenngas (4) verfeuert wird, **dadurch gekennzeichnet, dass** zur Bereitstellung von zur Vorbehandlung des Ammoniaks benötigter Wärme ein Rauchgas (4a), das bei der Befeuerung des Ammoniakcrackers (20) entsteht, in der Kondensationseinrichtung (10) bis unter den Taupunkt abgekühlt werden kann, um die Kondensationswärme zur Vorbehandlung (10) des Ammoniaks (1) einzusetzen.

12. Anlage (100) nach Anspruch 11, die zur Durchführung eines Verfahrens (100) nach einem der Ansprüche 1 bis 10 eingerichtet ist.
